# EUROPEAN PATENT SPECIFICATION

(11) **EP 0 798 842 B1**
(45) Date of publication and mention of the grant of the patent: **11.12.2002**
(21) Application number: 97302232.0
(22) Date of filing: 01.04.1997
(51) Int. Cl.: H02K 1/17, H02K 23/04, H02K 1/18

(54) **Magnet motor**
Magnetmotor
Moteur à aimants

(30) Priority: 31.03.1996 JP 10189496; 31.03.1996 JP 10189596; 31.03.1996 JP 10189796
(43) Date of publication of application: 01.10.1997
(73) Proprietor: SANYO ELECTRIC CO. LTD, Moriguchi-City, Osaka 570 (JP)
(72) Inventor: Fujiwara, Masakatsu, Moriguchi City, Osaka 570 (JP); Tanaka, Masaru, Moriguchi City, Osaka 570 (JP); Tanaka, Tatsuaki, Moriguchi City, Osaka 570 (JP); Suhara, Toshihiro, Moriguchi City, Osaka 570 (JP); Matsumoto, Toshihiro, Moriguchi City, Osaka 570 (JP); Sagara, Hiroaki, Moriguchi City, Osaka 570 (JP); Maeda, Yoshihiko, Moriguchi City, Osaka 570 (JP)
(74) Representative: Deans, Michael John Percy

(56) References cited:
- EP-A- 0 072 297
- CH-A- 213 327
- DE-A- 2 510 103
- FR-A- 2 695 267
- GB-A- 1 018 660
- GB-A- 2 029 121
- US-A- 4 110 645
- US-A- 4 534 539
- PATENT ABSTRACTS OF JAPAN vol. 011, no. 027 (E-474), 27 January 1987 & JP 61 196747 A (NIPPON DENSO CO LTD), 30 August 1986
- PATENT ABSTRACTS OF JAPAN vol. 013, no. 016 (E-703), 13 January 1989 & JP 63 220750 A (MITSUBA ELECTRIC MFG CO LTD), 14 September 1988
- TECHNIQUES CEM, no. 112, October 1981, PARIS, FRANCE, pages 19-24, XP002034449 E BOST: "Moteurs à aimants terres rares Samarium Cobalt"
- PATENT ABSTRACTS OF JAPAN vol. 009, no. 244 (E-346), 30 September 1985 & JP 60 096166 A (YASUKAWA DENKI SEISAKUSHO KK), 29 May 1985
- PATENT ABSTRACTS OF JAPAN vol. 007, no. 033 (E-157), 9 February 1983 & JP 57 186964 A (MATSUSHITA DENKI SANGYO KK), 17 November 1982
- PATENT ABSTRACTS OF JAPAN vol. 016, no. 174 (E-1195), 27 April 1992 & JP 04 017540 A (DAIKIN IND LTD), 22 January 1992
- PATENT ABSTRACTS OF JAPAN vol. 018, no. 586 (E-1627), 9 November 1994 & JP 06 217476 A (TOSHIBA CORP), 5 August 1994
- PATENT ABSTRACTS OF JAPAN vol. 015, no. 319 (E-1100), 14 August 1991 & JP 03 118752 A (HITACHI LTD;OTHERS: 01), 21 May 1991

## Description

The present invention relates to magnet motors and in particular, to their stators.

Attention has recently focused on the provision of electric bicycles; that is a bicycle which can be driven both by human power and by an electric motor. The motor driving section is driven by motive power provided by the human rider which is supplemented by a motor driving force provided by the electric motor.

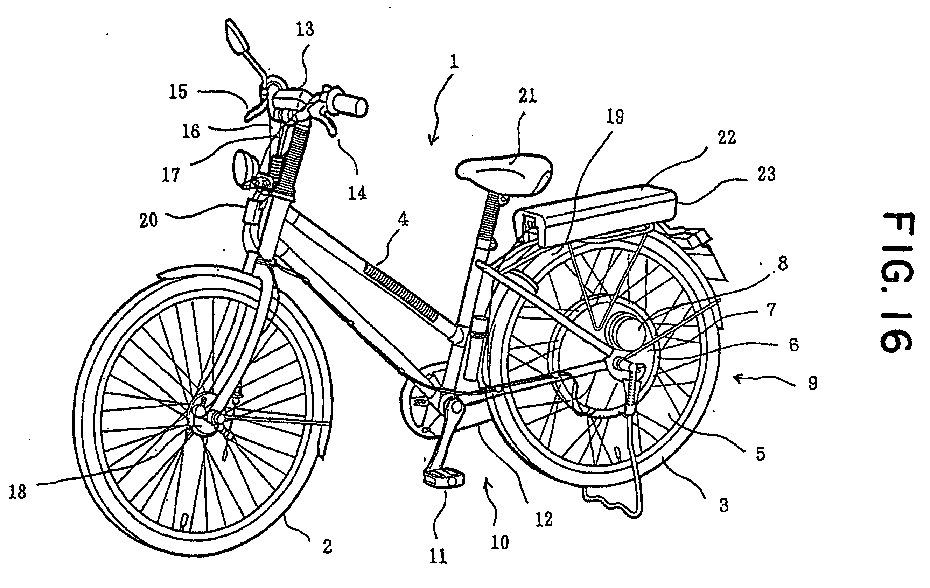

Thus, in Japanese unexamined Patent Publication No: H04-358987, there is a conventional manpower driving system and a motor driving system arranged in parallel. The motor output is controlled by detecting the driving force of the manpower driving system. The construction disclosed in the aforementioned Japanese Specification suffers from a number of disadvantages, particularly in the way in which the driving force is transmitted to the rear wheel from the alternative driving sources. With a view to overcoming such problems, the present applicants have sought to provide a novel form of electric bicycle in which the electric motor directly causes rotation of the rear wheel. A typical such system is illustrated in Figs. 16 to 19 of the accompanying drawings to which reference will first be made.

Fig. 16 shows an electric bicycle of the rear wheel direct driving type in an overall perspective view. The electric bicycle body 1 is provided with a motor 8 described in more detail below. The driving force of the motor 8 is adjusted in response to the extent of torque which is provide by the human rider so that the driving force is effectively provided by supplementing the human force by the force of the motor 8.

Coupled to the frame 4 of the electric bicycle body 1 are a front wheel 2, a rear wheel 3, a handlebar 13 and a saddle 21. The front wheel 2 is steered in conventional fashion by means of the handlebar 13. A dish-shaped casing 5 is provided at the rotation shaft of the rear wheel 3. Disc-shaped casing 5 has a rotating casing 6 and a fixed casing 7. Casing 6 rotates together with the rear wheel 3 relatively to the fixed casing 7. Motor 8 is built into the disc-shaped casing 5. The motor driving section is generally indicated at 9 and includes the disc-shaped casing 5 and the parts therein while the manpower driving section is shown generally at 10 and includes conventional pedals 11 and chain 12. As an alternative to chain 12 for transmitting power from the human rider, belts, rotation shafts or the like may be used instead.

Brake levers 14 and 15 are attached in a conventional fashion to the handlebar 13 and braking units 18 and 19, respectively are provided on the front wheel 2 and the rear wheel 3 and connected to the brake levers 14 and 15 respectively by cables 16 and 17. By pulling on the brake levers 14 and 15, the cables 16 and 17 are pulled, causing operation of the respective front and rear braking units 18 and 19. A braking switch 20 is incorporated in the wires 16 and 17 to provide a mechanism for disconnecting the electric power supply to the motor when the brake levers 14 or 15 are operated.

A battery section 22 serving as the power source for motor 8 is attached to the frame 4 above the rear wheel 3. Battery section 22 comprises a battery case 23 which is attached to the frame and can be released by sliding, and a single type chargeable cell housed in this battery case. The supply voltage is about 24 volts.

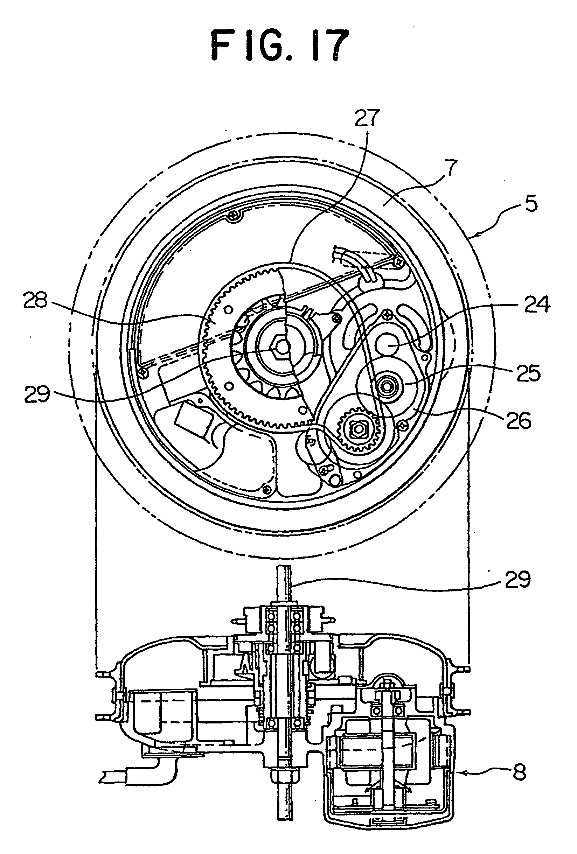

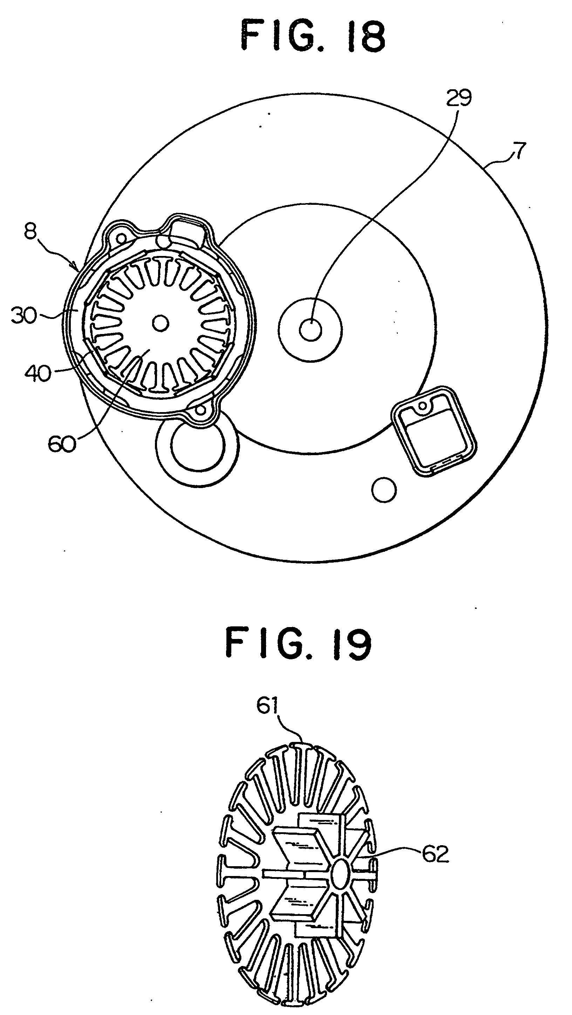

The internal structure of the disc-shaped casing 5 will be better understood by reference to Figs. 17 and 18, in which Fig. 17 shows both a front view and a sectional view.

Within the fixed side casing 7, there is a control board, a control section (not shown) comprising a radiator plate, the motor 8, a reduction gear mechanism 26 comprising three pulley groups consisting of a first pulley transmitting the output of shaft 24 of the motor, an intermediate pulley set 25 and a final stage pulley 28. A transmission belt 27 connects final stage pulley 28 with intermediate pulley set 25.

Final stage pulley 28 is fixed to the rotation side casing 6. Accordingly, when the motor 8 rotates all the components from output shaft 24 of motor 8 to the final stage pulley 28 rotate and rotation side casing 6 rotates together with the final stage pulley 28. A unidirectional clutch (not shown) intervenes in the smaller pulley of the second pulley set and is connected to the final stage pulley 28 so that when a force is applied to the pedals, the motor 8 does not rotate so that the pedals become lighter. In the drawings, reference numeral 29 identifies the axle of the rear wheel.

Fig. 18 is a front view of the casing 5 with the motor 8 mounted thereon, the motor being open to illustrate its stator 30, its magnets 40 attached to the stator and a rotor 60. The rotor 60 includes an insulating plate 61 and an integral cooling fan 62, better shown in Fig. 19. The motor driving section 9 is of significant size and adds significant weight to the bicycle as a whole. For use in connection with an electric bicycle there would be advantages both in minimizing weight and size of the motor driving section. The present invention is directed to a number of improvements in motor design specifically with a view to reducing the weight and size of the drive motor necessary for such an electric bicycle without significantly compromising its operation. The present invention arises from the applicants' work in providing small motors for such electric bicycles and is based upon the appreciation that the size of the motor can be reduced by employing a permanent magnet motor in which the magnet has a large BH-product to provide relatively large magnetic flux for its size. Magnets already known *per se* which have a large BH-product include the so-called "rare-earth magnets" such as a neodymium magnet comprising neodymium, iron and boron or a samarium-cobalt magnet. For example, neodymium magnets have a BH-product of 30 MGOe, which is about ten times as high as the BH-product of a ferrite magnet. However, neodymium magnets are very expensive, their cost being about thirty times as high as the cost of a ferrite magnet.

One possibility would be to employ a neodymium magnet in the field system of a rotor of a brushless motor. However, this arrangement is not to be preferred because of the resultant complicated circuit configuration and relatively high cost.

EP 0072297A discloses a magnet motor stator composed of a plurality of laminated core plates. Each plate includes holes in corresponding locations, so that the assembly of plates defines the magnet insertion holes for receiving flat magnets. Various symmetric arrangements for these holes are discussed.

US 4110645 discloses a motor having a stator having two flat magnets which are symmetrically arranged on opposite sides of a housing to either side of a rotatable armature. Pole pieces are provided extending from the magnets in the direction of the armature.

US4534539 discloses a magnetic valve assembly comprising four magnets symmetrically arranged within a housing.

GB1018660 (dating from 1962) discloses a stator having a housing and eight permanent magnets symmetrically arranged around a rotor.

JP-63-220750A discloses that a yoke of a motor is formed by laminating thin sheet members formed with specified shapes. The sheet members each have the same number of slots so that permanent magnets can be fitted into the yoke. JP-61-196747A discloses that magnets containing a curvature are retained in holes provided within a cover which is itself within the yoke of a rotary electric machine.

DE-A-2510103 (a document from 1975) describes a stator including magnets arranged in a symmetric pattern. The elements are provided trapped between elements which subtend about a quarter of the axis of the core. The elements do not themselves define holes for receiving the magnets, but rather gaps are defined between them.

As will be explained in more detail below, we have found that it is possible to adopt a magnet motor of the simple DC motor kind having a simple circuit configuration and with a mechanical brush, while at the same time reducing the size of the motor by using a powerful rare-earth magnet, such as a neodymium magnet as describe above in the stator. It is believed by the present applicants that motors of this form have never been produced previously. The applicants have shown that they achieve excellent results in allowing for the production of small size motors for use in electric bicycles in the manner described above.

In accordance with a first aspect of the present invention, we provide a magnet motor stator according to claim 1.

In a second and alternative aspect of the present invention, there is provided a magnet motor stator according to claim 13.

The invention is hereinafter more particularly described by way of example only with reference to the accompanying drawings in which:
Fig. 1 is a configuration diagram of a magnet motor stator in a comparative example;
Figs. 2A and 2B show respectively a configuration diagram and a perspective view for a second comparative example, and Fig. 2C shows how the magnets are inserted therein;
Figs. 3A, 3B and 3C are views generally similar to Figs. 2A, 2B and 2C for a further comparative example of motor stator;
Fig. 4 is a configuration diagram of a magnet motor stator and rotor in a further comparative example;
Fig. 5 is a view similar to fig. 4 for a further comparative example;
Fig. 6 is a view generally similar to Figs. 4 and 5 for a yet further comparative example;
Fig. 7 illustrates how a core of a stator in accordance with a comparative example may be built up from a plurality of core plates as illustrated to the left of Fig. 7 to form a complete core as shown to the right of Fig. 7;
Fig. 8, which is composed of Figs. 8A, 8B, 8C and 8D shows a motor stator which is a first embodiment. of the present invention including two different types of core plate shown respectively in Figs. 8A and 8B which are combined in a stack and laminated to form a core as shown in Fig. 8C into which magnets such as magnet 40 may be inserted as shown in Fig. 8D;
Figs. 9A, 9B, 9C and 9D are views similar to Figs. 8A, 8B, 8C and 8D respectively, illustrating a second embodiment of motor stator according to the present invention;
Fig. 10 illustrates in section how a comparative example of a stator may be fitted into an outer case;
Fig. 11A is a view generally similar to Fig. 10 for an alternative arrangement, and Fig. 11B is a sectional view through the arrangement of Fig. 11A;
Fig. 12A and Fig. 12B are similar views respectively of a third embodiment of a motor stator according to the invention, and of a comparative example of a magnet motor stator, showing the cooperation with a rotor;
Figs. 13 and 14 illustrate the magnetic flux distribution rtespectively for motors constructed as shown in Figs. 12A and 12B;
Figs. 15A, 15B and 15C show an individual stator core plate, a stack of such plates laminated to form a comparative example of a stator core and that stator core with permanent magnets inserted;
Fig. 16 shows an overall perspective view of an electric bicycle provided with an electric motor in a motor driving section;
Fig. 17 shows a front view and a sectional view of the interior of the motor driving section;
Fig. 18 shows the front view of the motor driving section with the motor casing open; and
Fig. 19 is a perspective view of an insulating plate of the rotor.

Before describing the embodiments of the invention, a number of comparative examples of motor stators will be discussed.

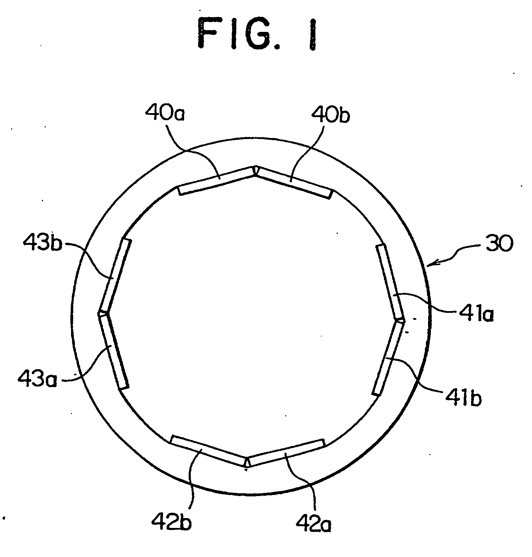

Fig. 1 illustrates the configuration diagram of a first comparative example of a magnet motor stator

The magnet motor stator 30 is formed by laminating steel sheets (preferably silicon steel sheets). Flat magnets 40a and 40b comprising a rare-earth substance such as neodymium together form a single magnetic pole of the stator. Similarly, further pairs 41a and 41b, 42a and 42b, and 43a and 43b of similar flat magnets form further magnetic poles, so that in this case we have a four-pole stator. The neodymium magnets are formed in a flat shape and are attached to the inner surface of the stator core formed by the steel sheets with an adhesive. In place of the neodymium magnets, alternative rare-earth magnets such as a samarium-cobalt magnet could be used. Because the magnets have a simple flat shape, manufacture is simple as compared with a conventional arcuate magnet, thereby reducing the cost of the magnet and hence of the stator as a whole. As the neodymium magnet has a large BH property, then as compared with a conventional magnet, a smaller sized magnet is sufficient to produce the same magnetic force. The stator as a whole may have a smaller diameter and a result it is possible to downsize the motor.

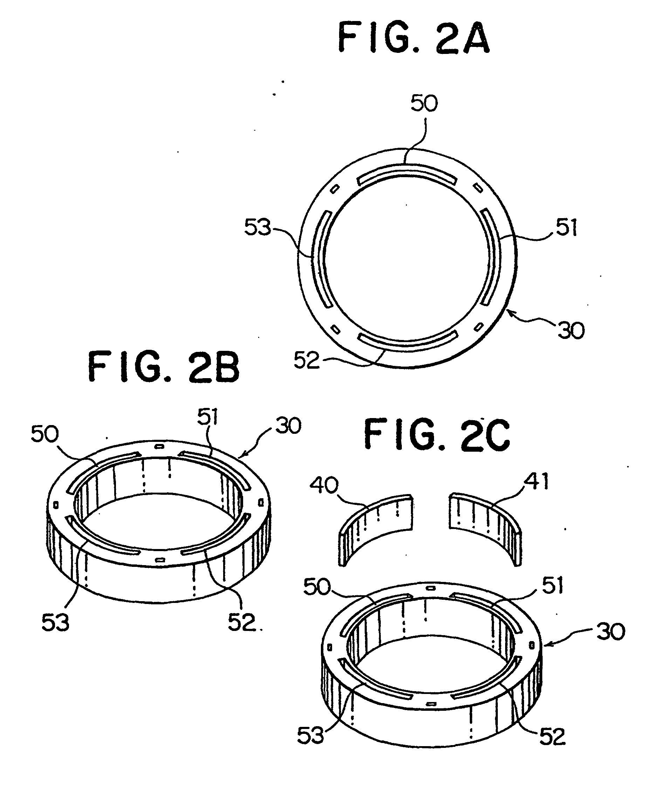

Figs. 2A to 2C show an alternative, comparative example of a magnet motor stator. The magnet motor stator 30 is formed by laminating steel sheets (preferably silicon steel sheets) whilst leaving insertion holes 50, 51, 52 and 53 for insertion of magnets into the stator. Examples of such magnets are illustrated at 40 and 41. The magnets are arcuate and of a ferromagnetic type but comprising a rare-earth substance such as neodymium. In this case, a single magnet forms a magnetic pole. Although only two such magnets are illustrated, it will be understood that in this case there will be four magnets inserted so as to provide for a four-pole stator. As an alternative to a neodymium magnet, an alternative rare-earth magnet may be employed, such as a samarium-cobalt magnet. The use of insertion holes eliminates the need to carefully position magnets as they are attached to the main body of the stator and may eliminate the need for bonding operation with an adhesive. This can reduce cost.

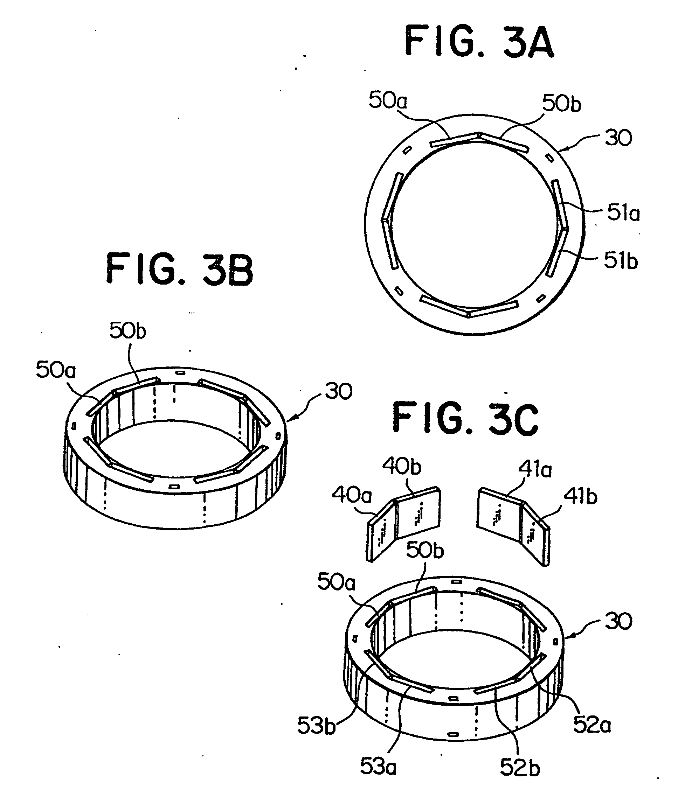

Figs. 3A, 3B and 3C show a further comparative example of a magnet motor stator. The stator 30 is formed by laminating steel sheets (such as silicon steel sheets) and formed so as to provide for magnet insertion holes 50a, 50b, 51a 51b, 52a, 52b, 53a and 53b. Flat magnets are arranged in pairs such as 40a and 40b and 41a and 41b to fit into appropriate pairs of magnet insertion holes such as 50a and 50b and 51a and 51b. Each pair of flat magnets provides a magnet pole so that the stator is a four-pole stator. Because the magnets are simple flat magnets as opposed to arcuate magnets and are merely inserted into insertion holes in the body of the stator, this embodiment obtains the advantages inherent in each of the previously described embodiments. The flat magnets comprise rare earth magnets such as a neodymium or samarium-cobalt magnet.

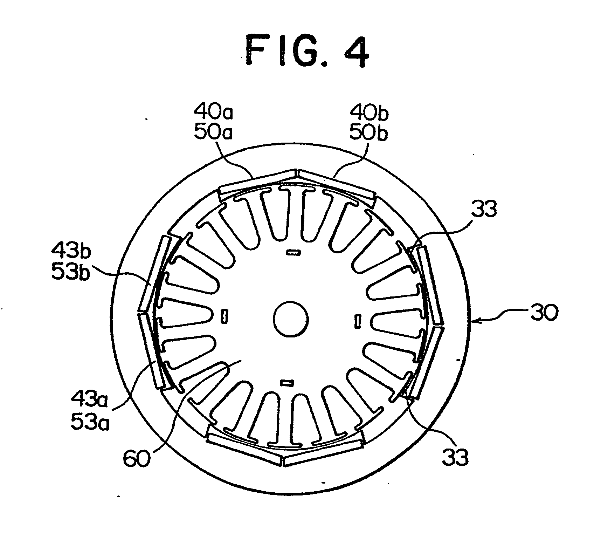

The arrangement of Fig. 4 illustrates a variation of the arrangements shown in Figs. 3a, 3b and 3c. Where appropriate, similar reference numerals are employed for the same items. As will be clear from Fig. 4, the surface of the stator radially inwardly of the magnet insertion holes is formed into an arcuate shape indicated at 33 corresponding to the adjacent shape of the rotor. This seeks to reduce leakage of magnetic flux and thus improve operation of the motor. Regions between the magnetic poles are cut away.

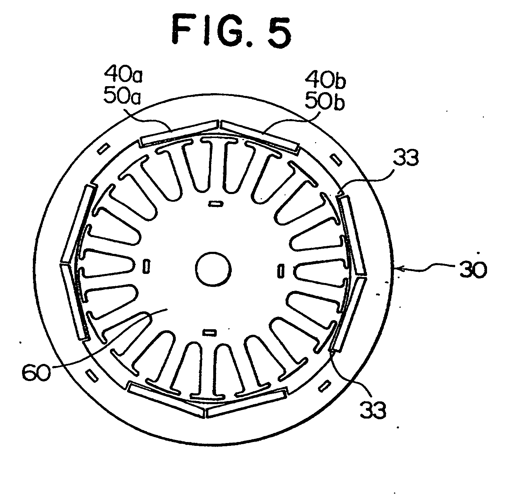

Fig. 5 shows a variation of the Fig. 4 arrangement in which towards the edge of each pole the air gap between the radially inner surface of the stator and the rotor 60 widens. This reduces magnetic flux at the edges of the poles while concentrating magnetic flux at the magnetic centre. It is possible to achieve a slow curve magnetic flux distribution with something approaching a sine wave shape, thereby improving the properties of the motor.

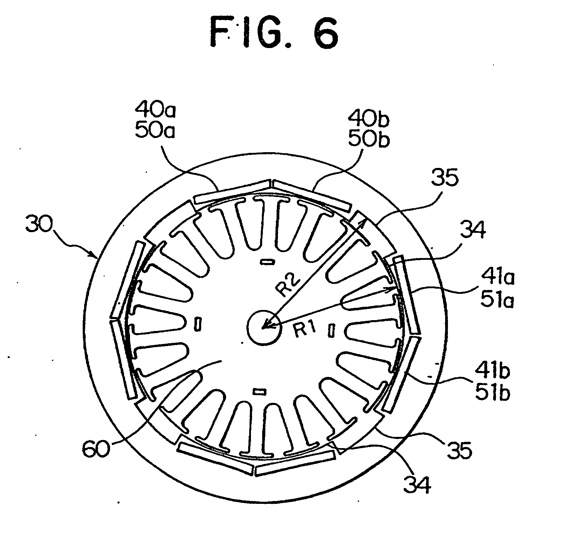

The arrangement of Fig. 6 is a further variation of the Fig. 4 arrangement. It will be seen that the radial distance R1 from the stator centre to the yoke face 34 adjacent a magnetic pole is significantly less than the radial distance R2 from the stator centre to the face of the stator 35 between the magnetic poles. This reduces magnetic flux into the region 35.

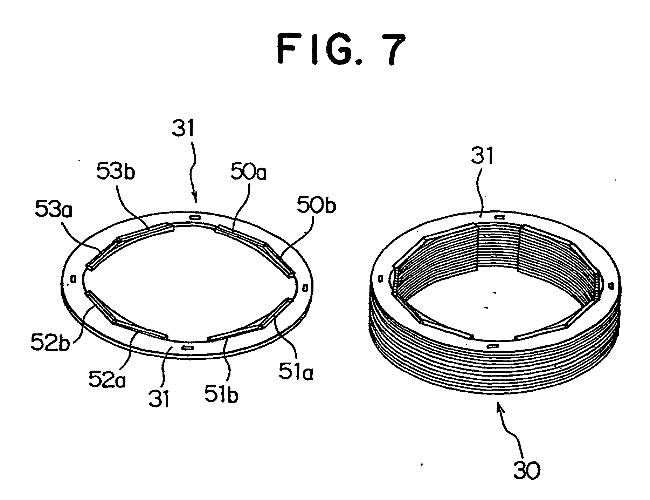

Fig. 7 illustrates in more detail how the core of a comparative example of a stator may be made up. In Fig. 7, a single core plate 31 may be formed by stamping a steel sheet such as a silicon steel sheet with magnet insertion holes 50a and 50b, 51a and 51b, 52a and 52b and 53a and 53b pierced in the individual plate. A stack 30 of such plates 31 is formed and laminated to form the stator core. Economies may be achieved by stamping out a stator core plate 31 and a corresponding core plate of the rotor at the same time from the same material.

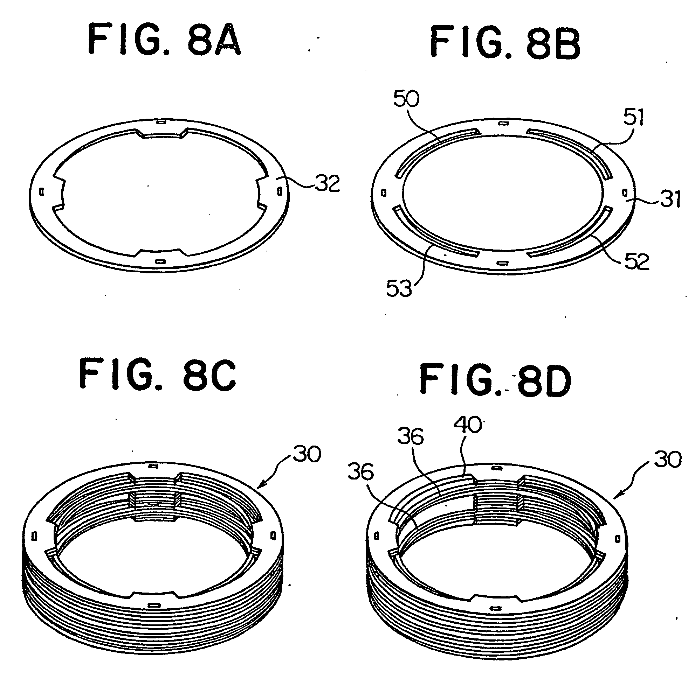

Figs. 8A to 8D illustrate an alternative construction of stator core which is part of the first embodiment of the invention. Some core plates such as plate 32 illustrated in Fig. 8A do not have any pierced openings for insertion of a magnet while other core plates such as plate 31 illustrated in Fig. 8B have corresponding pierced openings 50, 51, 52 and 53, in this case of arcuate form Fig. 8C shows the finished stator core formed by laminating the stator core plates in various combinations. The stack of core plates will include some in the form of core plate 32 and some in the form of core plate 31. Fig. 8D illustrates the same construction after insertion of a magnet 40 which it will be seen is held on the inner side only by the portions 36 associated with the core plates 31.

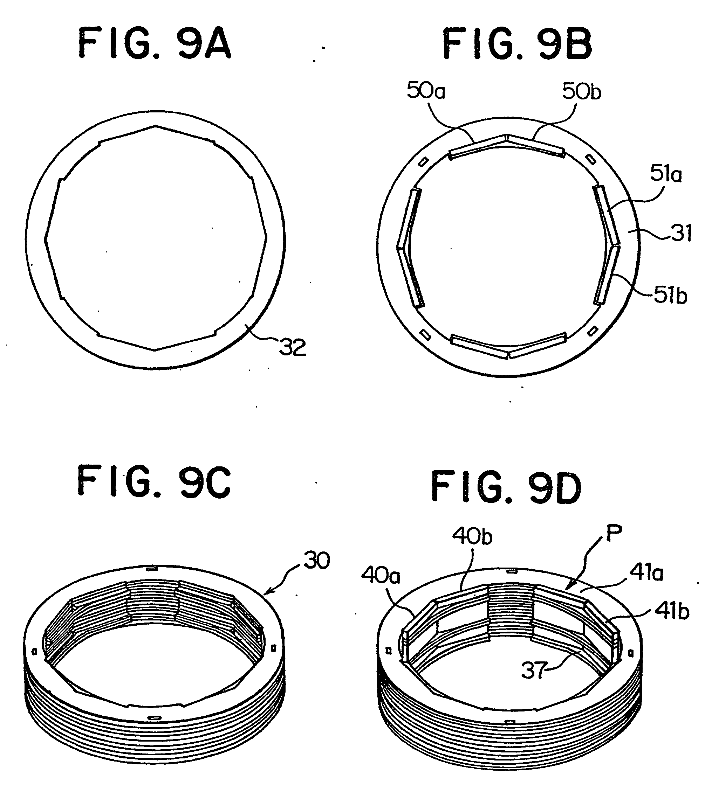

Figs. 9A, 9B 9C and 9D show a second embodiment of the invention in which pairs of flat magnets are employed as compared with arcuate magnets as in Figs. 8A to 8D. In the finished arrangement of Fig. 9C made up of stacks of core plates 32 and of core plates 31, the latter having magnet insertion piercings, magnets are inserted in pairs such as 40a and 40b and 41a and 41b through the piercings in those core plates 31 provided in the stack. It will be seen that in the finished stator as shown in Fig. 9D, the flat magnets on their inner side are held only by the regions 37 of those core plates formed with a configuration as shown in Fig. 9B, the magnets otherwise being exposed on their inner side. This additional exposure of the magnets as in the arrangements of Figs. 8A to 8D and Figs. 9A to 9D allows for increased flux and thus better magnetic properties while at the same time still allowing all the advantages of assembly provided by the previously described embodiments. So as to ensure that the inserted magnets remain in place, the endmost core plates can be deformed in the direction as shown by the arrow P in Fig. 9D, as by caulking so as to cause the endmost core plate to serve as a stopper against axial displacement of a magnet.

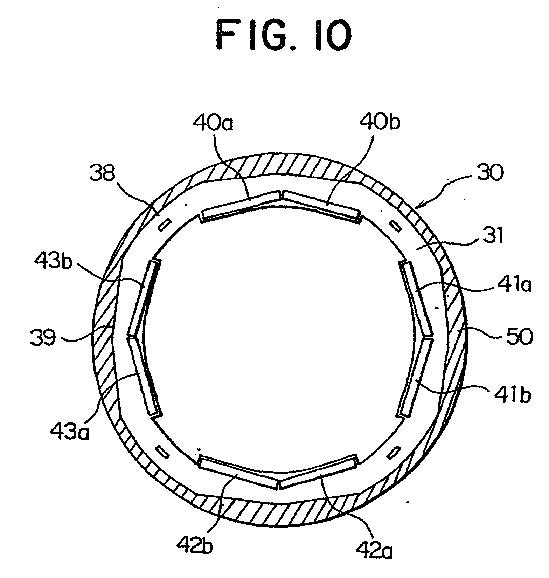

Fig. 10 shows a further comparative example of a magnet motor stator. Similar reference numbers are employed to those in earlier figures. It will be seen that in this case the core is inserted into a case 50. Regions such as those at 38 of the stator have a relatively large diameter while. regions such as those indicated at 39 have a relatively smaller diameter portions to insert the core into the case 50.

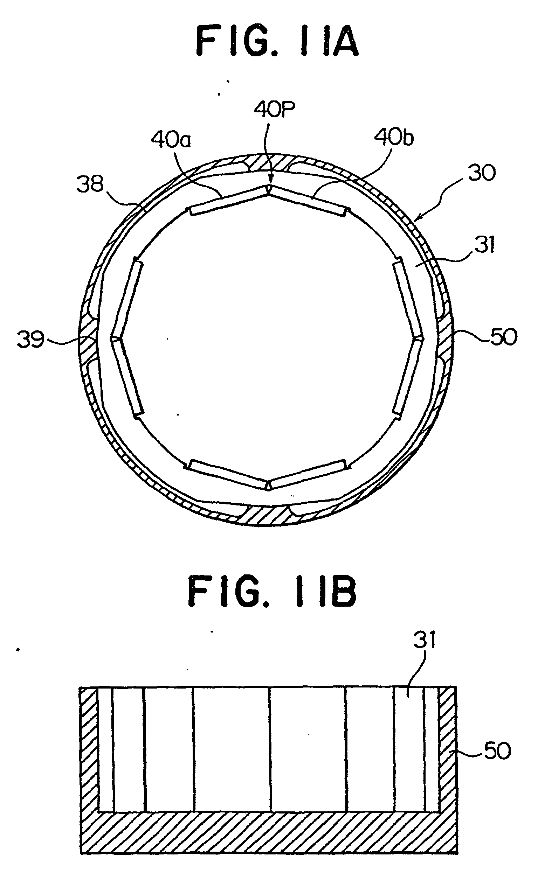

Figs. 11A and 11B illustrate a variation in which only the regions such as those at 39 are in contact with the inner surface of the case 50. It will be seen that these regions coincide with the angular position of the centre points such as 40P of respective pairs of magnets forming a magnetic pole such as the magnet pair 40a, 40b. This arrangement divides the magnetic flux at the magnetic poles into right and left directions relative to the magnetic pole centre resulting in a lower magnetic flux density at the centre portion of the pole. The use of a smaller thickness of the core at the centre of the pole magnet therefore does not adversely affect the properties of the motor. The effect is thus to allow for a further reduction in the size of the motor to give a more compact motor with lighter weight.

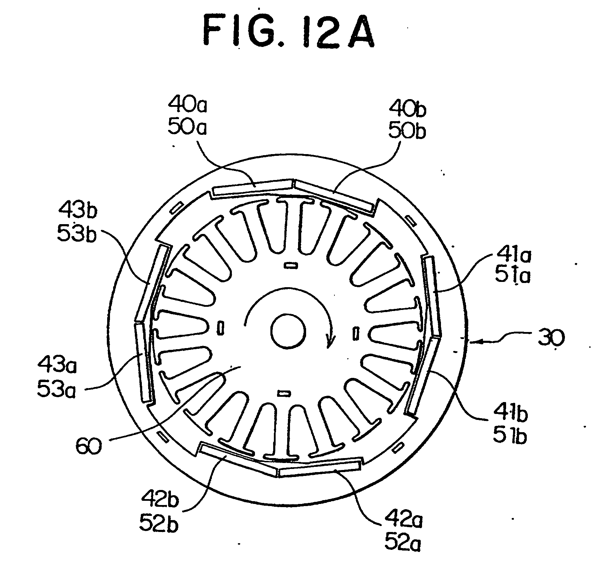

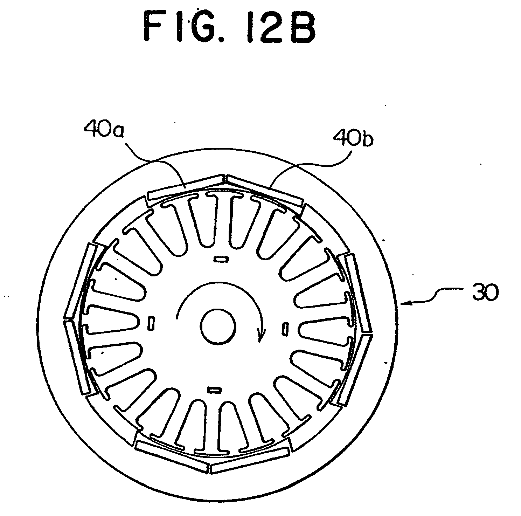

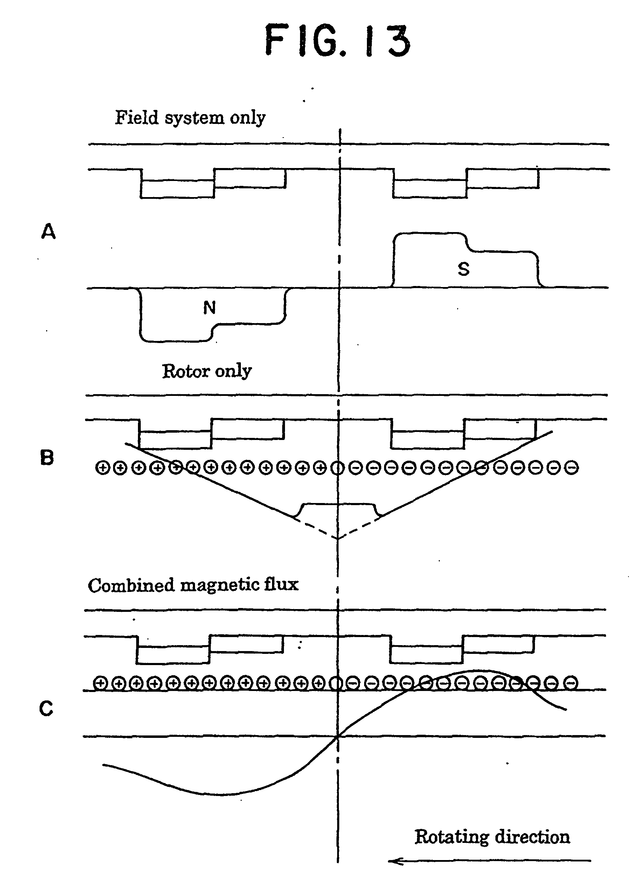

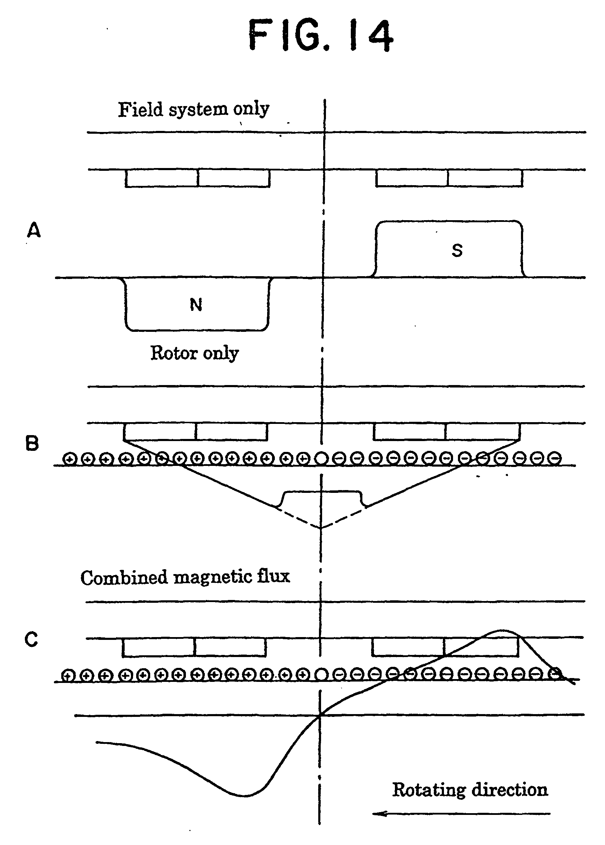

The two flat magnets making up a single magnetic pole may be arranged asymmetrically with respect to the centre line of the magnetic pole as shown in Fig. 12A, which illustrates the third embodiment of the invention, or symmetrically with respect to that centre line as shown in Fig. 12B,which illustrates a comparative example. In these figures like reference numerals are used for the same parts as in previous figures. Thus, as can be seen in Fig. 12A, in the direction of rotation of the rotor 60 there is a wider air gap as the rotor approaches the pole than as it leaves. The effect of this on the magnetic flux is illustrated in Fig. 13 while the effect of the geometry of Fig. 12B upon the magnetic flux is as shown in Fig. 14. In each of these figures there is shown at A the magnetic flux distribution resulting from the stator magnets alone. In line B is shown the magnetic flux distribution produced by the rotor current alone and in line C these two fluxes are superimposed. It will be seen that the superimposed flux distribution in line C in each case is periodic but in Fig. 14 which corresponds to the symmetrical arrangement of Fig. 12B, the resultant flux of line C departs significantly from the desired sign wave. As a result, there is an uneven flux at diametrically opposed positions of the rotor which makes it impossible to use energy effectively and increases losses. With the arrangement of Figs. 12B and 14, rectification at the positions of highest magnetic flux density involves large energy and a tendency for high rectifying voltage to be produced in this part of the coil causing sparking on the rectifier and, as a result, the service life of brushes is reduced. In comparison, in the arrangement of Fig. 13 the variation is significantly smoother and more approaching the ideal sine wave variation. There is no substantial lack of balance diametrically across the rotor.

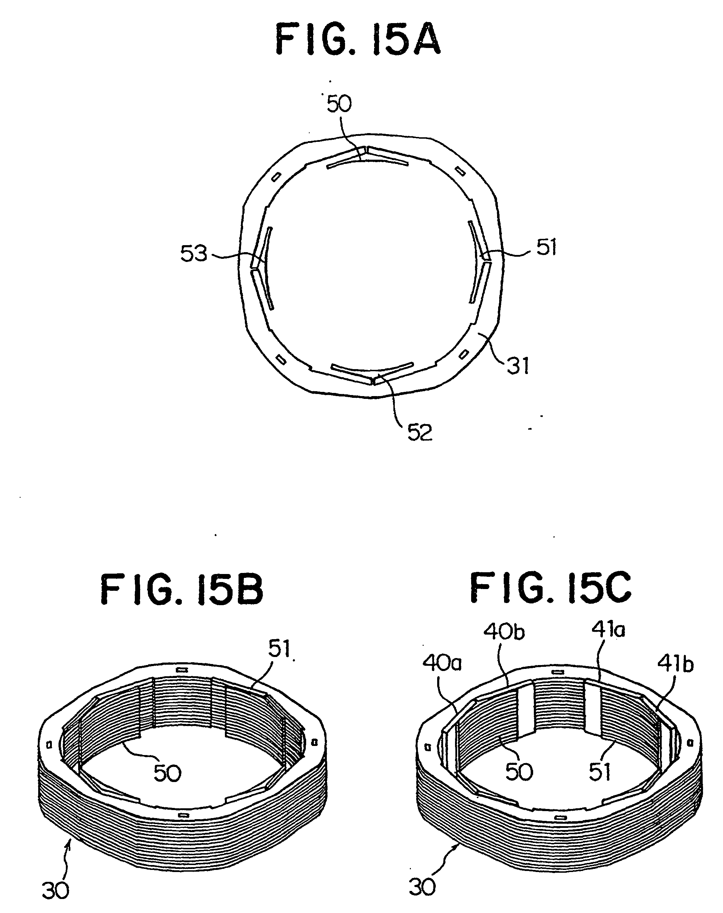

Figs. 15A, 15B and 15C illustrate another comparative example of a stator. An individual stator core plate formed by stamping out a steel sheet (preferably a silicon steel sheet) is shown at 31 and has integral magnetic insertion holders formed on its inner side at 50, 52 and 53. As can be seen, these magnetic insertion holders correspond in configuration to the regions surrounding the magnetic insertion holes in earlier embodiments with the difference that the periphery of the hole is incomplete. Fig. 15B shows the stator core formed by stacking a plurality of stator core plates 31 as shown in Fig. 15A and Fig. 15C shows the finished stator with the flat magnets 40a, 40b, 41a, 41b etc arranged in pairs, as in previous embodiments. As can be seen from Fig. 15C, this arrangement provides for direct exposure of the flat magnets towards the rotor at the outer edges of the pole.

## Claims

1. A magnet motor stator (30) comprising:
a plurality of first stator core sheets (31) each having magnet insertion holes (51; 51a, 51b) passing axially therethrough, and
a plurality of second stator core sheets (32) each having a plurality of recesses such that each recess corresponds to a respective magnet insertion hole (51; 51a, 51b) of each of the plurality of first stator core sheets (31);
wherein the plurality of first stator cores sheets (31) and the plurality of second stator core sheets (32) are laminated such that a magnet (40) will pass through a respective recess of each of the plurality of second stator core sheets (32) and a respective magnet insertion hole (51; 51a, 51b) of each of the plurality of first stator core sheets (31).

2. A magnet motor stator (30) according to claim 1, wherein the first stator core sheets (31) each have a recess between each pair of magnet insertion holes along an inner periphery.

3. The magnet motor stator (30) according to claim 1, wherein said magnet motor stator has one of the second stator core sheets (32) as a top stator core sheet and another of the second stator core sheets (32) as a bottom stator core sheet.

4. The magnet motor stator (30) according to claim 3, wherein at least one of the top stator core sheet or the bottom stator core sheet contacts an inserted magnet (40) so as to act as a stop for such magnet in an axial direction.

5. The magnet motor stator (30) according to claim 4, wherein said at least one top stator core sheet or bottom stator core is caulked to contact an inserted magnet (40).

6. The magnet motor stator (30) according to claim 1, wherein the stator core sheets are laminated such that at least two of the second stator core sheets (32) are laminated together and at least two of the first stator core sheets (31) are laminated together.

7. The magnet motor stator (30) according to claim 1, wherein each of the first stator core sheets (31) is a ring.

8. The magnet motor stator (30) according to claim 1, wherein the first stator core sheets (31) have a circular outer periphery and an inner periphery having arcuate sections adjacent to the magnet insertion holes (51a, 51b), and wherein the arcuate sections are relatively thicker in a radial direction around a central portion of each of the arcuate sections than at respective end portions thereof.

9. The magnet motor stator according to claim 1, further comprising a plurality of magnets,
wherein magnet insertion holes of said magnet motor stator are paired together and each holds one magnet, the held magnets forming a pole, the magnets in each respective pole being in close proximity to each other and being arranged asymmetrically with respect to a line extending radially from a center of said magnet motor stator to the center of the pole.

10. The magnet motor stator according to claim 9, wherein there are four poles.

11. The magnet motor stator according to claim 9, wherein
for each pair of magnets forming the pole, the magnets have near end portions and opposite end portions, and wherein
a radial distance of the opposite end portion of one of the magnets from the center of said magnet motor stator is greater than a radial distance of the opposite end portion of the other of the magnets from the center of said magnet motor stator.

12. The magnet motor stator according to claim 11, wherein
the plurality of first stator cores have an inner periphery having arcuate sections adjacent to the magnet insertion holes such that the arcuate sections are relatively thicker in a radial direction at a central portion of each of the arcuate sections than at respective end portions thereof,
an air gap is provided between each arcuate section and a rotor when rotatably connected to said magnet motor stator,
a direction in which the rotor turns defines a rotation direction such that the air gap is greater at the opposite end portion of one of the magnets, which opposite end portion is upstream with respect to the near end portions of the magnets in the rotation direction of the rotor.

13. A magnet motor stator (30) comprising:
a stator core comprising a plurality of stator core sheets which each surround an axis of the stator, the stator core sheets defining at least four magnet insertion holes (50a, 50b; 51a, 51b, 52a, 52b, 53a, 53b) passing axially through the core, wherein the magnet insertion holes are paired together to form poles upon receipt of magnets (40a, 40b, 41a, 41b, 42a, 42b, 43a, 43b) therein, and whereby the received magnets are arranged asymmetrically with respect to a line extending radially from a center of said magnet motor stator to a center of the pole, and
magnets (40a, 40b, 41a, 41b, 42a, 42b, 43a, 43b) received in each one of the insertion holes (50a, 50b, 51a, 51b, 52a, 52b, 53a, 53b), the magnets in each pair of insertion holes having opposite end portions and near end portions at which the magnets are in close proximity to each other.

14. The magnet motor stator (30) according to claim 13, wherein a radial distance of the opposite end portion of one of the magnets from the center of the magnet motor stator (30) is greater than a radial distance of the opposite end portion of the other of the magnets from the center of said magnet motor stator.

15. The magnet motor stator (30) according to claim 14, wherein
the plurality of stator core sheets have an inner periphery having arcuate sections adjacent to the magnet insertion holes such that the arcuate sections are relatively thicker in a radial direction at a central portion of each of the arcuate sections than at respective end portions thereof,
an air gap is provided between each arcuate section and a rotor when rotatably connected to said magnet motor stator,
a direction in which the rotor turns defines a rotation direction such that the air gap is greater at the opposite end portion of one of the magnets (50a, 51a, 52a, 53a) of each pair, which opposite end portion is upstream with respect to the near end portion of that magnet (50a, 51a, 52a, 53a) of each pair in the rotation direction of the rotor.

## Patentansprüche

1. Stator (30) eines Magnetmotors, bestehend aus:
einer Gruppe von ersten Statorkernblechen (31), die jeweils mit in axialer Richtung durch diese verlaufenden Magnetaufnahmeschlitzen (51; 51a, 51b) versehen sind, und
einer Gruppe von zweiten Statorkernblechen (32), die jeweils mit mehreren Ausnehmungen versehen sind, die so angeordnet sind, dass jede Ausnehmung einem jeweiligen Magnetaufnahmeschlitz (51; 51a, 51b) jedes Blechs der Gruppe der ersten Statorkernbleche (31) entspricht;
bei dem die Gruppe der ersten Statorkernbleche (31) und die Gruppe der zweiten Statorkernbleche (32) so geschichtet sind, dass ein Magnet (40) in eine jeweilige Ausnehmung eines jeden der Gruppe von zweiten Statorkernblechen (32) und in einen jeweiligen Magnetaufnahmeschlitz (51; 51a, 51b) eines jeden der Gruppe von ersten Statorkernblechen (31) eingesetzt werden kann.

2. Stator (30) eines Magnetmotors nach Anspruch 1, bei dem die ersten Statorkernbleche (31) jeweils am inneren Umfang zwischen einem jeden Paar von Magnetaufnahmeschlitzen eine Ausnehmung haben.

3. Stator (30) eines Magnetmotors nach Anspruch 1, bei dem eines der zweiten Statorkernbleche (32) als ein Deckstatorkernblech und ein weiteres der zweiten Statorkernbleche (32) als ein Bodenstatorkernblech vorgesehen ist.

4. Stator (30) eines Magnetmotors nach Anspruch 3, bei dem mindestens eines von beiden, das Deckstatorkernblech oder das Bodenstatorkernblech, einen eingesetzten Magnet (40) so berührt, dass es für einen solchen Magnet in axialer Richtung als Anschlag dient.

5. Stator (30) eines Magnetmotors nach Anspruch 4, bei dem mindestens eines der beiden, das Deckstatorkernblech oder das Bodenstatorkernblech, verstemmt ist und so einen eingesetzten Magnet (40) berührt.

6. Stator (30) eines Magnetmotors nach Anspruch 1, bei dem die Statorkernbleche so geschichtet sind, dass mindestens zwei der zweiten Statorkernbleche (32) und mindestens zwei der ersten Statorkernbleche (31) jeweils miteinander geschichtet sind.

7. Stator (30) eines Magnetmotors nach Anspruch 1, bei dem jedes der ersten Statorkernbleche (31) einen Ring bildet.

8. Stator (30) eines Magnetmotors nach Anspruch 1, bei dem die ersten Statorkembleche (31) einen kreisförmigen Außenumfang und neben den Magnetaufnahmeschlitzen (51a, 51b) einen Innenumfang mit bogenförmigen Abschnitten aufweisen und bei dem die bogenförmigen Abschnitte in einer radialen Richtung um einen Mittenbereich jedes der bogenförmigen Abschnitte relativ dicker als deren entsprechende Endabschnitte sind.

9. Stator eines Magnetmotors nach Anspruch 1, des Weiteren bestehend aus mehreren Magneten,
bei dem die Magnetaufnahmeschlitze des Stators des Magnetmotors paarweise nebeneinander angeordnet sind und jeder davon einen Magnet aufnimmt, wobei die aufgenommenen Magnete einen Pol bilden und die Magnete eines jeweiligen Pols unmittelbar nebeneinander und zu einer sich radial von einer Mitte des Stators des Magnetmotors zur Mitte des Pols erstreckenden Linie asymmetrisch angeordnet sind.

10. Stator eines Magnetmotors nach Anspruch 9, bei dem vier Pole vorhanden sind.

11. Stator eines Magnetmotors nach Anspruch 9, bei dem die Magnete eines jeden den Pol bildenden Magnetpaars Abschnitte der einander zugewandten Seiten und Abschnitte der voneinander abgewandten Seiten aufweisen und bei dem
ein radialer Abstand des Abschnitts der abgewandten Seite eines der Magnete vom Mittelpunkt des Stators des Magnetmotors größer als ein radialer Abstand des Abschnitts der abgewandten Seite des anderen der Magnete vom Mittelpunkt des Stators des Magnetmotors ist.

12. Stator eines Magnetmotors nach Anspruch 11, bei dem
die Gruppe der ersten Statorkerne einen inneren Umfang aufweist, der neben den Magnetaufnahmeschlitzen mit bogenförmigen Abschnitten versehen ist, die so gestaltet sind, dass sie in radialer Richtung an einem mittleren Bereich vergleichsweise jeweils dicker als an entsprechenden Endabschnitten derselben sind,
zwischen jedem bogenförmigen Abschnitt und einem Rotor, wenn dieser drehbar im Stator des Magnetmotors eingesetzt ist, ein Luftspalt vorhanden ist,
eine Richtung, in der der Rotor umläuft, eine Drehrichtung festlegt, so dass der Luftspalt am Abschnitt der abgewandten Seite eines der Magnete größer ist, wobei sich der Abschnitt der abgewandten Seite in der Drehrichtung des Rotors vor den Abschnitten der zugewandten Seiten der Magnete befindet.

13. Stator (30) eines Magnetmotors, bestehend aus:
einem Statorkern, der von einer Gruppe von Statorkernblechen gebildet wird, die jeweils eine Statorachse umgeben, wobei die Statorkernbleche mindestens vier Magnetaufnahmeschlitze (50a, 50b, 51a, 51b, 52a, 52b, 53a, 53b) bilden, die sich in axialer Richtung durch den Kern erstrecken, bei dem die Magnetaufnahmeschlitze Paare und nach dem Einsetzen der Magnete (40a, 40b, 41a, 41b, 42a, 42b, 43a, 43b) Pole bilden und wodurch die eingesetzten Magnete zu einer sich radial von der Mitte des Stators des Magnetmotors zur Mitte des Pols erstreckenden Linie asymmetrisch angeordnet sind, und
den in jedem der Aufnahmeschlitze (50a, 50b, 51a, 51b, 52a, 52b, 53a, 53b) aufgenommenen Magneten (40a, 40b, 41a, 41b, 42a, 42b, 43a, 43b), wobei die Magnete in jedem Paar der Magnetaufnahmeschlitze Abschnitte der voneinander abgewandten Seiten und Abschnitte der einander zugewandten Seiten aufweisen, an denen die Magnete unmittelbar nebeneinander angeordnet sind.

14. Stator (30) eines Magnetmotors nach Anspruch 13, bei dem ein radialer Abstand des Abschnitts der abgewandten Seite eines der Magnete vom Mittelpunkt des Stators (30) des Magnetmotors größer als ein radialer Abstand des Abschnitts der abgewandten Seite des anderen Magnets vom Mittelpunkt des Stators des Magnetmotors ist.

15. Stator (30) eines Magnetmotors nach Anspruch 14, bei dem die Gruppe der Statorkerne einen inneren Umfang aufweist, der neben den Magnetaufnahmeschlitzen mit bogenförmigen Abschnitten versehen ist, die so gestaltet sind, dass sie in radialer Richtung in einem mittleren Bereich vergleichsweise jeweils dicker als an entsprechenden Endabschnitten derselben sind,
zwischen jedem bogenförmigen Abschnitt und einem Rotor, wenn dieser drehbar im Stator des Magnetmotors eingesetzt ist, ein Luftspalt vorhanden ist,
eine Richtung, in der der Rotor umläuft, eine Drehrichtung festlegt, so dass der Luftspalt am Abschnitt der abgewandten Seite eines der Magnete (50a, 51a, 52a, 53a) eines jeden Paars größer ist, wobei sich der Abschnitt der abgewandten Seite in der Drehrichtung des Rotors vor dem Abschnitt der zugewandten Seite des entsprechenden Magneten (50a, 51a, 52a, 53a) eines jeden Paars befindet.

## Revendications

1. Stator de moteur à aimant (30) comprenant :
- plusieurs premières feuilles de coeur de stator (31) ayant chacune des trous d'insertion d'aimant (51 ; 51a, 51b) qui le traversent axialement, et
- plusieurs secondes feuilles de coeur de stator (32) ayant chacune plusieurs cavités de telle manière que chaque cavité corresponde à un trou d'insertion d'aimant (51 ; 51a, 51b) respectif de chacune des premières feuilles de coeur de stator (31) ;
- dans lequel les premières feuilles de coeur de stator (31) et les secondes feuilles de coeur de stator (32) sont laminées de telle façon qu"un aimant (40) traverse la cavité respective de chacune des secondes feuilles de coeur de stator (32) et le trou d'insertion d'aimant respectif (51 ; 51a, 51b) de chacune des premières feuilles de coeur de stator (31).

2. Stator de moteur à aimant (30) selon la revendication 1, dans lequel les premières feuilles de coeur de stator (31) comprennent chacune une cavité entre chaque paire de trous d'insertion d'aimant le long du pourtour intérieur.

3. Stator de moteur à aimant (30) selon la revendication 1, dans lequel ledit stator de moteur à aimant comprend l'une des secondes feuilles de coeur de stator (32) comme feuille de coeur de stator supérieure et une autre des secondes feuilles de coeur de stator (32) comme feuille de coeur de stator inférieure.

4. Stator de moteur à aimant (30) selon la revendication 3, dans lequel au moins l'une parmi la feuille de coeur de stator supérieure et la feuille de coeur de stator inférieure est en contact avec un aimant inséré (40) de façon à servir de butée pour ledit aimant dans le sens axial.

5. Stator de moteur à aimant (30) selon la revendication 4, dans lequel ladite feuille de coeur de stator supérieure ou feuille de coeur de stator inférieure est matée pour contacter un aimant inséré (40).

6. Stator de moteur à aimant (30) selon la revendication 1, dans lequel les feuilles de coeur de stator sont laminées de telle sorte qu'au moins deux des secondes feuilles de coeur de stator (32) sont laminées ensemble et au moins deux des premières feuilles de coeur de stator (31) sont laminées ensemble.

7. Stator de moteur à aimant (30) selon la revendication 1, dans lequel chacune des premières feuilles de coeur de stator (31) est un anneau.

8. Stator de moteur à aimant (30) selon la revendication 1, dans lequel les premières feuilles de coeur de stator (31) ont une périphérie externe circulaire et une périphérie interne qui comprend des sections courbes à côté des trous d'insertion d'aimant (51a, 51b), et dans lequel les sections courbes sont relativement plus épaisses dans un sens radial autour d'une partie centrale de chacune des parties courbes qu'à leurs parties d'extrémité respectives.

9. Stator de moteur à aimant selon la revendication 1, comprenant également plusieurs aimants,
dans lequel les trous d'insertion d'aimant dudit stator de moteur à aimant sont appariés et chacun maintient un aimant, les aimants maintenus formant un pôle, les aimants dans chaque pôle respectif étant à proximité étroite l'un de l'autre et étant disposés asymétriquement par rapport à une ligne s'étendant radialement à partir du centre dudit stator de moteur à aimant jusqu'au centre du pôle.

10. Stator de moteur à aimant selon la revendication 9, dans lequel il y a quatre pôles.

11. Stator de moteur à aimant selon la revendication 9, dans lequel
- pour chaque paire d'aimants qui forment le pôle, les aimants ont des parties d'extrémité proches et des parties d'extrémité opposées, et dans lequel
- la distance radiale entre la partie d'extrémité opposée de l'un des aimants et le centre dudit stator de moteur à aimant est supérieure à la distance radiale entre la partie d'extrémité opposée de l'autre aimant et le centre dudit stator de moteur à aimant.

12. Stator de moteur à aimant selon la revendication 11, dans lequel
- les premiers coeurs de stator ont une périphérie interne comprenant des parties courbes adjacentes aux trous d'insertion d'aimant, de telle façon que les parties courbes sont relativement plus épaisses dans le sens radial dans la partie centrale de chacune des parties courbes qu'aux parties d'extrémité respectives de celles-ci,
- un entrefer est placé entre chaque partie courbée et un rotor quand il est relié de façon rotative au dit stator de moteur à aimant,
- le sens dans lequel le rotor tourne définit le sens de rotation de telle façon que l'entrefer est supérieur dans la partie d'extrémité opposée de l'un des aimants, laquelle partie d'extrémité opposée est en amont par rapport aux parties d'extrémité proches des aimants dans le sens de rotation du rotor.

13. Stator de moteur à aimant (30) comprenant :
- un coeur de stator comprenant plusieurs feuilles de coeur de stator qui entourent chacune un axe du stator, les feuilles de coeur de stator définissant au moins quatre trous d'insertion d'aimant (50a, 50b, 51a, 51b, 52a, 52b, 53a, 53b) qui traversent axialement le coeur, dans lequel les trous d'insertion d'aimant sont appariés pour former des pôles lorsqu'ils reçoivent des aimants (40a, 40b, 41a, 41b, 42a, 42b, 43a, 43b), et moyennant quoi les aimants insérés sont disposés de façon asymétrique par rapport à une ligne qui s'étend radialement à partir du centre dudit stator de moteur à aimant jusqu'au centre du pôle, et
- des aimants (40a, 40b, 41a, 41b, 42a, 42b, 43a, 43b) insérés dans chacun des trous d'insertion (50a, 50b, 51a, 51b, 52a, 52b, 53a, 53b), les aimants dans chaque paire de trous d'insertion ayant des parties d'extrémité opposées et des parties proches de l'extrémité sur lesquelles les aimants sont proches les uns des autres.

14. Stator de moteur à aimant (30) selon la revendication 13, dans lequel la distance radiale de la partie d'extrémité opposée de l'un des aimants au centre du stator de moteur à aimant (30) est supérieure à la distance radiale de la partie d'extrémité opposée de l'autre des aimants au centre dudit stator de moteur à aimant.

15. Stator de moteur à aimant (30) selon la revendication 14, dans lequel
- les feuilles de coeur de stator ont une périphérie interne comprenant des sections courbes adjacentes aux trous d'insertion d'aimant, de telle façon que les sections courbes sont relativement plus épaisses dans le sens radial dans la partie centrale de chacune des parties courbes qu'à leurs extrémités respectives,
- un entrefer est placé entre chaque partie courbe et le rotor quand il est relié de façon pivotante au dit stator de moteur d'aimant,
- le sens dans lequel le rotor tourne définit le sens de rotation de telle façon que l'entrefer est supérieur dans la partie d'extrémité opposée de l'un des aimants (50a, 51a, 52a, 53a) de chaque paire, laquelle partie d'extrémité opposée est en amont par rapport aux parties d'extrémité proches de cet aimant (50a, 51a, 52a, 53a) de chaque paire dans le sens de rotation du rotor.
